# EUROPÄISCHE PATENTSCHRIFT

(11) **EP 3 665 030 B1**
(45) Veröffentlichungstag und Bekanntmachung des Hinweises auf die Patenterteilung: **04.05.2022**
(21) Anmeldenummer: 18753165.2
(22) Anmeldetag: 09.08.2018
(51) Int. Cl.: B60L 53/53, B60L 58/26

(54) **ELEKTRISCHE SPEICHERVORRICHTUNG ZUM BEREITSTELLEN VON ELEKTRISCHER ENERGIE FÜR EINEN LADEVORGANG ZUMINDEST EINES ELEKTRISCH ANTREIBBAREN KRAFTFAHRZEUGS SOWIE NACHRÜSTMODUL UND BETRIEBSVERFAHREN**
ELECTRIC STORAGE DEVICE FOR PROVIDING ELECTRIC ENERGY FOR A CHARGING OPERATION OF AT LEAST ONE ELECTRICALLY-DRIVEN MOTOR VEHICLE, AND RETROFIT MODULE AND OPERATING METHOD
DISPOSITIF D'ACCUMULATION ÉLECTRIQUE DESTINÉ À FOURNIR DE L'ÉNERGIE ÉLECTRIQUE POUR UNE OPÉRATION DE CHARGE D'AU MOINS UN VÉHICULE AUTOMOBILE POUVANT ÊTRE PROPULSÉ À L'ÉLECTRICITÉ AINSI QUE MODULE DE MISE À NIVEAU ET PROCÉDÉ DE FONCTIONNEMENT

(30) Priorität: 10.08.2017 DE 102017213938
(43) Veröffentlichungstag der Anmeldung: 17.06.2020
(73) Patentinhaber: Bayerische Motoren Werke Aktiengesellschaft, 80809 München (DE)
(72) Erfinder: GOHLA-NEUDECKER, Bodo, 81825 München (DE); HESSELMANN, Jan, 85375 Neufahrn (DE); PFEIFFER, Albrecht, 85777 Fahrenzhausen (DE); MOHR, Soeren, 80992 München (DE)
(86) Internationale Anmeldenummer: PCT/EP2018/071641
(87) Internationale Veröffentlichungsnummer: WO 2019/030331

(56) Entgegenhaltungen:
- CN-A- 106 828 157
- DE-A1-102012 220 218
- DE-A1-102015 112 347
- US-A1- 2012 043 935
- US-A1- 2015 217 654

## Beschreibung

Die Erfindung betrifft eine elektrische Speichervorrichtung zum Speichern von elektrischer Energie, mittels welcher dann ein elektrisches antreibbares Kraftfahrzeug aufgeladen werden kann.

Schließlich umfasst die Erfindung auch ein Verfahren zum Betreiben der erfindungsgemäßen Speichervorrichtung.

Elektrisch antreibbare Kraftfahrzeuge müssen mit elektrischer Energie versorgt werden können, die mit einer verhältnismäßig großen Leistung, z.B. mit mehr als 5 kW, aber insbesondere mehr als 20 kW oder sogar mehr als 50 kW, in das aufzuladende Kraftfahrzeug übertragen werden können soll. Um die Energie nicht mit dieser Leistung über eine längere Strecke des öffentlichen Stromnetzes übertragen zu müssen, kann die elektrische Energie vor Ort, wo der Ladevorgang stattfinden soll, oder zumindest in der Nähe dieses Ladeorts, beispielsweise näher als 1 km, zwischengespeichert werden. Hierzu kann ein so genannter elektrischer Stationärspeicher vorgesehen sein, in welchem die Energie in einer Speichereinheit gespeichert wird. Eine solche Speichereinheit kann beispielsweise aus einer Mehrzahl von elektrischen Einzelspeichern, z.B. Batterien, gebildet sein. Um die Speichereinheit zu klimatisieren, damit seine Temperatur in einem vorbestimmten Temperaturfenster liegt, kann ein Stationärspeicher ein Kühlaggregat zum Bereitstellen von Kühlleistung aufweisen. Ein Kühlkreislauf kann dann hierzu Wärmeenergie von der Speichereinheit abführen und zum Kühlaggregat hin fördern, wo dann in bekannter Weise die Wärmeenergie dem Kühlmedium des Kühlkreislaufs entzogen wird. Dieses Entziehen der Wärmeenergie stellt das besagte Bereitstellen der Kühlleistung dar. Der Kühlkreislauf kann auch verzweigt ausgestaltet sein.

Um die elektrische Energie in das Kraftfahrzeug zu übertragen, kann ein Ladekabel vorgesehen sein, dass an das Kraftfahrzeug angeschlossen werden kann. Eine solche Ladeanschlusseinrichtung mit Ladekabel kann beispielsweise als eine sogenannte Ladesäule ausgestaltet sein, ähnlich einer Zapfsäule für Benzin. Für einen Ladevorgang wird dann die elektrische Energie von dem lokalen Stationärspeicher zur Ladesäule hin übertragen, wo sie dann über das Ladekabel in das Kraftfahrzeug gelangt. Werden hierbei die beschriebenen elektrischen Leistungen eingestellt, also die elektrische Energie mit ein einem entsprechend großen elektrischen Strom durch das Ladekabel übertragen, kann sich das Ladekabel aufgrund der Leitungs- und Kontaktverluste erwärmen.

Aus diesem Grund ist es angedacht, auch in einer Ladesäule ein Kühlaggregat für eine aktive Kühlung bereitzustellen, um die elektrische Energie in einem möglichst dünnen und/oder leichten Ladekabel übertragen zu können. Die Kühlung ermöglicht eine Dauernutzung mit hohen Strömen. Dies ermöglicht erst die Handhabung von DC-Schnelladekabeln sehr hoher Leistungen für jedermann.

Um also eine Ladeleistung von mehr als 5 kW, aber insbesondere mehr als 20 kW oder sogar mehr als 50 kW, für einen Ladevorgang bereitstellen zu können, ist ein technischer Zusatzaufwand für die aktive Kühlung der Speichereinheit des Stationärspeichers und des Ladekabels der Ladesäule notwendig. Dies macht das aufrüsten oder steigern der Ladeleistungen technisch aufwendig und kostspielig.

Das Dokument CN 106 828 157 A zeigt eine Ladesäule, die elektrische Energie aus einem elektrischen Stromnetz empfangen und über ein Ladekabel in ein Kraftfahrzeug übertragen kann. In der Ladesäule kann zusätzlich ein Kühlaggregat bereitgestellt sein, welches den AC/DC-Wandler der Ladesäule kühlen und zusätzlich Kühlflüssigkeit durch das Ladekabel in das Kraftfahrzeug pumpen kann, um auch die Batterie des Kraftfahrzeugs während des Ladevorgangs mit zu kühlen. Damit die Batterie mit eigener Kühlflüssigkeit gekühlt werden kann, kann in dem Kraftfahrzeug ein Wärmetauscher zum Entkoppeln zwischengeschaltet sein.

Das Dokument DE 10 2015 112 347 A1 zeigt ein Ladekabel, dessen Anschlusseinrichtung über einen Kühlkanal mit Kühlmittel versorgt werden kann. Durch den Kühlkanal wird Luft geblasen.

In dem Dokument US 2012/043935 A1 ist beschrieben, dass eine Ladesäule sowohl mit einer elektrischen Speichereinheit zum Speichern von elektrischer Energie als auch mit einem Kühlaggregat zum Empfangen von Kühlleistung gekoppelt sein kann.

Der Erfindung liegt die Aufgabe zugrunde, elektrische Leistung von einer Speichereinheit durch ein Ladekabel hindurch zu einem elektrisch antreibbaren Kraftfahrzeug hin zu übertragen.

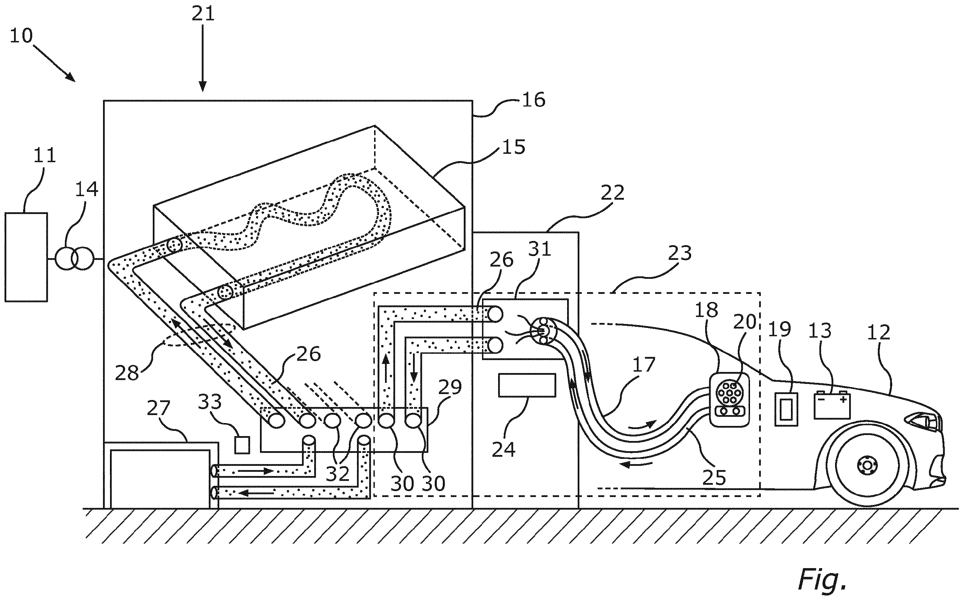

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figur beschrieben.

Durch die Erfindung ist eine elektrische Speichervorrichtung zum Bereitstellen von elektrischer Energie bereitgestellt, um zumindest ein elektrisch antreibbares Kraftfahrzeug aufzuladen. Die Speichervorrichtung kann auf der Grundlage eines elektrischen Stationärspeichers gebildet sein, wie er eingangs beschrieben wurde. Allgemein weist also die Speichervorrichtung die beschriebene Speichereinheit zum Speichern der Energie sowie ein Kälteaggregat oder Kühlaggregat zum Bereitstellen von Kühlleistung auf. Ein Kühlkreislauf ist dazu eingerichtet, Wärmeenergie von der Speichereinheit mittels eines Kühlmediums zu dem Kühlaggregat zu fördern.

Um nun die elektrische Energie von der Speichereinheit zu dem Kraftfahrzeug zu übertragen, weist die elektrische Speichervorrichtung zumindest ein Ladekabel auf, das mit der Speichereinheit gekoppelt ist. Es kann also ein einziges Ladekabel oder es können mehrere Ladekabel vorgesehen sein. Jedes Ladekabel kann dabei in an sich bekannter Weise zum Anschließen an ein Kraftfahrzeug ausgestaltet sein. Es kann beispielsweise einen Stecker zum Einstecken in eine Ladebuchse des jeweiligen Kraftfahrzeugs aufweisen.

Jedes Ladekabel weist nun des Weiteren einen Kühlkanal auf. Mit anderen Worten kann das Ladekabel selbst von dem Kühlmedium durchflossen werden. Dennoch ist kein zusätzliches Kühlaggregat notwendig. In der Speichervorrichtung ist stattdessen eine Verteilereinrichtung bereitgestellt, die dazu eingerichtet ist, einen Teil des Kühlmediums des besagten Kühlkreislaufs in den Kühlkanal des Ladekabels umzuleiten oder mittels eines Wärmeübertragers die Wärmeenergie aus dem Kühlkanal in des Kühlmedium abzuführen. Mit anderen Worten lässt sich also das zumindest eine Ladekabel mit der Kühlleistung des Kühlaggregats kühlen, das auch zum Kühlen der Speichereinheit verwendet wird. Über die Verteilereinrichtung wird also Kühlleistung zu dem jeweiligen Ladekabel hin abgezweigt. Es ist also nicht notwendig, zwei Kühlaggregate, nämlich eines für die Speichereinheit und eines für das zumindest eine Ladekabel, bereitzustellen.

Durch die Erfindung ergibt sich der Vorteil, dass keine redundante Ausführung der Kühltechnik nötig ist, da das zumindest eine Ladekabel und die Speichereinheit beide dasselbe Kühlaggregat nutzen. Zusätzlich ergibt sich auch eine größere Effizienz durch Nutzung eines einzelnen Kühlaggregats für die Speichereinheit und das Ladekabel im Vergleich zur Bereitstellung zweier Kühlaggregate. Grund dafür ist, dass zwei Kühlaggregate häufiger bei einer geringeren Teillast betrieben werden müssten als ein einzelnes Kühlaggregat, wodurch sich bei zwei Kühlaggregaten höhere laufende Kosten ergeben würden und gegebenenfalls auch längere Stillstandszeiten und/oder Leerlaufzeiten in denen eine Kühlung des Ladekabels und/oder des der Speichereinheit nicht notwendig sind. Zudem verringern sich auch Wartungskosten und der Aufwand für die Zertifizierung, wenn nur ein einzelnes Kühlaggregat bereitgestellt werden muss.

Bei der Verteilereinrichtung kann ein Anschluss zum Anschließen des Ladekabels und ein Zusatzanschluss jeweils beispielsweise als ein Stutzen oder als ein Ventil zum Aufstecken oder Anschließen eines Kühlschlauches oder Kühlrohres ausgestaltet sein. Die Verteilereinrichtung selbst kann beispielsweise als ein Rohr oder als eine Kammer oder als ein Kanister ausgestaltet sein. Die Verteilereinrichtung kann auch in der besagten Weise einen Wärmeübertrager aufweisen, welcher Wärmeenergie aus dem Ladekabel aufnimmt und an das Kühlmedium überträgt. Der Kühlkreislauf kann die Verteilereinrichtung mit dem Kühlmedium durchspülen. An dem Anschluss kann dann das Kühlmedium in ein Ladekabel und/oder an einem Zusatzanschluss in eine der besagten anderen Komponenten abfließen.

Zu der Erfindung gehören auch Weiterbildungen oder Weiterentwicklungen, deren Merkmale zusätzliche Vorteile ergeben.

Der Stationärspeicher kann an ein öffentliches Stromnetz angeschlossen sein, um die Energie aus dem Stromnetz zu empfangen. Hierbei kann die bezogene Ladeleistung zum Nachladen der Speichereinheit des Stationärspeichers geringer sein als die dann bereitgestellte Ladeleistung, mit welcher die Energie aus dem der Speichereinheit in das Kraftfahrzeug übertragen wird.

Die erfindungsgemäße Speichervorrichtung kann ein Ladekabel oder mehrere Ladekabel aufweisen, wobei an jedes Ladekabel für einen Ladevorgang ein Kraftfahrzeug angeschlossen werden kann. An dem jeweiligen Ladekabel kann ein Stecker zum Einstecken in eine Ladebuchse des jeweiligen Kraftfahrzeugs bereitgestellt sein. Eine Weiterentwicklung sieht vor, dass der jeweilige Kühlkanal des jeweiligen Ladekabels über eine Wärmetauscheinrichtung mit dem Stecker des Ladekabels gekoppelt ist und/oder dass der Kühlkanal sogar durch den Stecker geführt oder verlegt ist. Hierdurch kann auch Verlustwärme abgeführt werden, die durch Kontaktverluste im Stecker selbst entstehen können. Die besagte Wärmetauscheinrichtung zum Abführen der Verlustwärme aus dem Stecker in das Kühlmedium kann beispielsweise auf der Grundlage einer thermischen Kopplung realisiert werden, die mittels eines Metalls oder einer Metalllegierung realisiert sein kann. Der Kühlkanal kann beispielsweise auf der Grundlage eines Hohlraums in einem Steckergehäuse des Steckers und/oder mittels eines Schlauches durch den Stecker selbst geführt sein.

Das Kühlmedium kann ein Gas (zum Beispiel Luft) und/oder eine Flüssigkeit (z.B. ein Wasser-Glykol-Gemisch und/oder ein Öl und/oder ein Kältemittel) umfassen. Beispiele für Kältemittel sind: R134a, R1234yf, R744. Die beschriebenen möglichen Kühlmedien können dabei in mehreren, voneinander getrennten Segmenten jeweils einzeln bereitgestellt sein. Solche Segmente können über Wärmeübertrager oder Wärmetauscher gekoppelt sein. Es kann auch vorgesehen sein, dass im gesamten Kühlkreislauf ein einzelnes Kühlmedium der beschriebenen Art vorgesehen ist.

Die erfindungsgemäße Speichervorrichtung kann mehrteilig ausgestaltet sein. Eine Weiterentwicklung hierzu sieht vor, dass das zumindest eine Ladekabel durch jeweils eine Ladeanschlusseinrichtung, beispielsweise eine Ladesäule, bereitgestellt ist, die baulich von einem Gehäuse der Speichereinheit bereitgestellt ist. Um die Energie dann von der Speichereinheit zur Ladesäule hin zu übertragen, kann vorgesehen sein, dass eine elektrische Kopplung der Speichereinheit mit der Ladeanschlusseinrichtung über einen an der Speichereinheit bereitgestellten DC/AC-Wandler (DC - Gleichstrom, AC - Wechselstrom) und einen in der Ladeanschlusseinrichtung bereitgestellten AC/DC-Wandler vorgesehen ist. Mit anderen Worten erfolgt die Übertragung der Energie mittels Wechselstrom. Hierdurch ergibt sich der Vorteil, dass das Gehäuse der Speichereinheit einerseits und die Ladeanschlusseinrichtung andererseits z.B. über ein öffentliches Stromnetz gekoppelt sein können. Hierdurch ist dann die zusätzliche Verlegung von elektrischen Kabeln zwischen Speichereinheit und Ladeanschlusseinrichtung unnötig. Es ist dann nur die Verlegung eines Schlauchsystems und/oder Rohrsystems zum Übertragen des Kühlmediums zwischen Kühlaggregat und Ladeanschlusseinrichtung nötig.

Alternativ dazu kann vorgesehen sein, dass das Ladekabel einerseits und die Speichereinheit andererseits zu einer baulichen Einheit der Speichervorrichtung integriert sind. Das Ladekabel kann dann über einen DC-Busschienensystem oder ein DC-Kabelsystem und über einen DC/DC-Wandler (Gleichspannungswandler) mit der Speichereinheit gekoppelt sein und die Speichervorrichtung kann dazu eingerichtet sein, die Energie mittels Gleichstrom von der Speichereinheit in das Ladekabel zu übertragen. Insbesondere ist vorgesehen, die Energie ausschließlich mittels Gleichstrom zu übertragen. Es sind also keine DC/AC-Wandlung und keine AC/DC-Wandlung für die Übertragung der Energie von der Speichereinheit in das Ladekabel notwendig sondern nur eine Spannungsanpassung mittels des DC/DC-Wandlers. Durch die wegfallenden Wandlerschritte sind auch entsprechende Wandlerverluste reduziert. Damit steigt die Effizienz des Betriebs der Speichervorrichtung beziehungsweise der Ladeinfrastruktur.

Die besagte Verteilereinrichtung, mittels welcher das Kühlmedium aus dem Kühlkreislauf abgezweigt und in dem Ladekabel bereitgestellt oder mittels welcher Wärmeenergie aus dem Kühlkanal des Ladekabels abgeführt wird, weist gemäß einer Weiterentwicklung zumindest einen jeweiligen Zusatzanschluss auf, über welchen jeweils eine weitere Komponente der Speichervorrichtung an den Kühlkreislauf angeschlossen ist. Mit anderen Worten wird die Verteilereinrichtung dazu genutzt, das Kühlmedium oder die Kühlleistung auch zu zumindest einer weiteren Komponente der Speichervorrichtung zu führen, um auch von dort Wärmeenergie abführen zu können. Eine solche Komponente kann beispielsweise ein Transformator und/oder der besagte AC/DC-Wandler und/oder der besagte DC/AC-Wandler und/oder der besagte DC/DC-Wandler und/oder eine Busschiene oder ein Kabel sein, wie es z.B. zum Bereitstellen eines DC-Busses vorgesehen sein kann. Hierdurch ergibt sich der Vorteil, dass sich das Kühlaggregat auch zum Kühlen zumindest einer weiteren Komponente nutzen lässt.

Eine Weiterentwicklung sieht vor, dass eine gemeinsame Steuereinheit zum Steuern des Kühlaggregats und zum Steuern einer Leistungsabgabe der Speichereinheit an das Ladekabel und bevorzugt auch zum Abrechnen der abgegebenen Energie und/oder eine Dauer der Nutzung vorgesehen ist. Mit anderen Worten sind keine zwei Steuereinheiten, eine für den Betrieb der Speichereinheit und eine für einen Betrieb einer Ladeanschlusseinrichtung (z.B. Ladesäule) nötig. Eine einzelne zentrale Steuereinheit zur Abrechnung laufender Kosten kann also insbesondere für mehrere Ladekabel vorgesehen sein. Die Steuereinheit kann auf der Grundlage eines Mikroprozessors oder einer anderen Steuerung (z.B. einer speicherprogrammierbaren Steuerung - SPS) gebildet sein.

Wie bereits ausgeführt, kann es sich bei der Speichervorrichtung um eine Bauvariante eines Stationärspeichers handeln. Eine Weiterentwicklung hierzu sieht entsprechend vor, dass die Speichereinheit und das Kühlaggregat als ein Stationärspeicher ausgestaltet sind, wie er aus dem Stand der Technik bekannt ist, und das Ladekabel und eine elektrische Verbindungseinrichtung zum elektrischen Verbinden des Ladekabels mit dem Stationärspeicher als ein Nachrüstmodul für den Stationärspeicher bereitgestellt sind. Es kann also ein herkömmlicher Stationärspeicher mittels des Nachrüstmoduls dahingehend erweitert werden, dass zumindest ein Ladekabel in dem Stationärspeicher nachgerüstet werden kann.

Der besagte Ladevorgang kann ein Aufladevorgang oder ein Entladevorgang sein. Mit anderen Worten ist vorgesehen, dass der Ladevorgang einen Energiefluss von der Speichervorrichtung zum Kraftfahrzeug und/oder vom Kraftfahrzeug zur Speichervorrichtung vorsieht. Dabei kann bei jedem Ladevorgang eine andere Flussrichtung des Energieflusses vorgegeben oder eingestellt sein.

Entsprechend umfasst die Erfindung auch ein solches Nachrüstmodul für einen elektrischen Stationärspeicher, das zumindest ein Ladekabel und eine elektrische Verbindungseinrichtung zum elektrischen Verbinden des zumindest einen Ladekabels mit dem Stationärspeicher bereitstellt. Zusätzlich kann ein DC/DC-Wandler (als Leistungssteller) und/oder eine Steuereinheit (zum Steuern eines Ladevorgangs) und/oder eine Abrechnungseinheit (zum Abrechnen von übertragener Energie und/oder eine Nutzungsdauer) in dem Nachrüstmodul bereitgestellt sein. Das zumindest eine Ladekabel weist jeweils auch den beschriebenen Kühlkanal auf. Zudem weist jedes Ladekabel eine Anschlusseinrichtung auf, die dazu eingerichtet ist, den Kühlkanal des Ladekabels mit einer Verteilereinrichtung eines Kühlkreislaufs des Stationärspeichers zu koppeln oder zu verbinden. Die Verteilereinrichtung kann Bestandteil des Nachrüstmoduls oder bereits Bestandteil des Stationärspeichers sein. Somit kann auch die Kühlleistung des Kühlaggregats des Stationärspeichers genutzt werden, um das zumindest eine Ladekabel des Nachrüstmodul zu kühlen.

Zu der Erfindung gehören auch Weiterentwicklungen des Nachrüstmoduls, die Merkmale aufweisen, wie sie bereits im Zusammenhang mit den Weiterentwicklungen der erfindungsgemäßen Speichervorrichtung geschrieben worden sind. So kann das Nachrüstmodul auch zumindest ein Ladekabel mit aktiv gekühltem Stecker aufweisen. Zudem kann vorgesehen sein, dass auch ein AC/DC-Wandler und/oder ein Transformator des Nachrüstmoduls dazu ausgestaltet sind, mittels des Kühlkreislaufs des Stationärspeichers gekühlt zu werden.

Durch den Betrieb der erfindungsgemäßen Speichervorrichtung ergibt sich auch ein Verfahren, das ebenfalls Bestandteil der Erfindung ist. Bei dem Verfahren speichert eine Speichereinheit einer Speichervorrichtung elektrische Energie für einen Ladevorgang, in welchem zumindest ein elektrisch antreibbares Kraftfahrzeug aufgeladen wird. Ein Kühlaggregat stellt Kühlleistung bereit und ein Kühlkreislauf fördert Wärmeenergie von der Speichereinheit mittels eines Kühlmediums zu dem Kühlaggregat. Dort wird also das Kühlmedium gekühlt und somit die Wärmeenergie aus dem Kühlmedium entfernt oder abgeführt.

Bei der Speichervorrichtung ist zumindest ein Ladekabel mit der Speichereinheit gekoppelt (d.h. in der beschriebenen Weise entweder über AC/Wechselstrom und DC/Gleichstrom oder ausschließlich über DC/Gleichstrom). das jeweilige Ladekabel ist zum Anschließen an das Kraftfahrzeug ausgestaltet und weist einen Kühlkanal auf, wobei eine Verteilereinrichtung einen Teil des Kühlmediums in den Kühlkanal des Ladekabels umleitet oder mittels eines Wärmetauschers Wärme aus dem Kühlkanal aufnimmt und an das Kühlmedium überträgt. Somit wird also auch das Ladekabel gekühlt.

Zu der Erfindung gehören auch Weiterentwicklungen des erfindungsgemäßen Verfahrens, die Merkmale aufweisen, wie sie bereits im Zusammenhang mit den Weiterentwicklungen der erfindungsgemäßen Speichervorrichtung beschrieben worden sind.

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigt die einzige Figur schematische Darstellung einer Weiterentwicklung der erfindungsgemäßen Speichervorrichtung.

Die Figur zeigt eine elektrische Speichervorrichtung 10, mittels welcher elektrische Energie aus einem Stromnetz 11 zwischengespeichert werden kann, um dann mittels der gespeicherten Energie ein elektrisch antreibbares Kraftfahrzeug 12 zu versorgen. Somit kann in dem Beispiel eine Traktionsbatterie 13 des Kraftfahrzeugs 12 nach geladen werden. Eine Ladeleistung beim Übertragen der Energie in das Kraftfahrzeug 12 kann größer als 5 kW, insbesondere größer als 10 kW sein.

Die Speichervorrichtung 10 kann beispielsweise über einen Transformator 14 an das Stromnetz 11 angeschlossen sein. Die Speichervorrichtung 10 kann eine Speichereinheit 15 aufweisen, in welcher die Energie zwischengespeichert werden kann. Die Speichereinheit 15 kann beispielsweise auf der Grundlage von elektrochemischen Speicherzellen oder Batteriezellen gebildet sein. Es können beispielsweise mehrere Batteriezellenmodule oder auch mehrere Batterien in der Speichervorrichtung 10 angeordnet sein. Die Speichereinheit 15 kann beispielsweise in einem Gehäuse 16 der Speichervorrichtung 10 angeordnet sein. Eine Gesamtspeicherkapazität der Speichereinheit 15 kann in einem Bereich von 20 kWh bis 100 MWh liegen kann. Die Speichereinheit 15 kann mehrere Einzelspeicher aufweisen, deren Speicherkapazität in einem Bereich von 0,1 kWh bis 10 MWh liegen kann.

Um das Kraftfahrzeug 12 mit der Energie zu versorgen, kann ein Ladekabel 17 vorgesehen sein, welches einen Stecker 18 aufweisen kann, der in eine Ladebuchse 19 des Kraftfahrzeugs eingesteckt werden kann, um elektrische Leitungen 20 des Ladekabels 10 mit dem Kraftfahrzeug 12 zu verbinden.

In dem veranschaulichten Beispiel kann die Speichervorrichtung 10 auf der Grundlage eines Stationärspeichers 21 gebildet sein, welcher die Speichereinheit 15 aufweisen kann. Der Stationärspeicher 21 kann an das Stromnetz 11 angeschlossen sein, um lokal elektrische Energie zwischen zu speichern, damit die Energie dort mit einer größeren Leistung bereitgestellt werden kann, als dies über das Stromnetz 11 direkt von einem Kraftwerk aus möglich oder zugelassen wäre.

Das Ladekabel 17 kann Bestandteil einer Ladeanschlusseinrichtung 22 sein, die beispielsweise als eine Ladesäule ausgestaltet sein kann. Das Ladekabel 17 kann dabei Bestandteil eines Nachrüstmoduls 23 sein, mit welchem der Stationärspeicher 21 um die Funktionalität der Lademöglichkeit erweitert worden sein kann. Das Nachrüstmodul 23 kann hierzu das Ladekabel 17 und eine Anschlusseinrichtung 24 aufweisen, mittels welcher die elektrischen Leitungen 20 des Ladekabels 17 beispielsweise über einen DC/DC-Wandler mit einem DC-Bus (Stromschienen oder Kabel für Gleichstrom) oder mit einem DC/DC-Wandler (Gleichspannungswandler) elektrisch verbunden werden kann, um einen Gleichstrom aus der Speichereinheit 15 in das Ladekabel 17 ohne eine AC-Wandlung zu übertragen.

Bei der Speichervorrichtung 10 ist dafür gesorgt, dass beim Übertragen der Energie aus der Speichereinheit 15 in das Kraftfahrzeug 12 trotz der bei einer vorgegebenen Nennleistung entstehenden Verlustwärme in dem Ladekabel 17 dieses nicht über einen vorbestimmten Höchstwert erhitzt wird. Hierzu kann das Ladekabel 17 einen Kühlkanal 25 aufweisen, durch welchen ein Kühlmedium 26 von einem Kühlaggregat 27 gepumpt werden kann. Das Kühlaggregat 27 kann in an sich bekannter Weise aufgebaut sein und z.B. einen Kompressor und/oder Wärmeübertrager aufweisen.

Das Kühlaggregat 27 muss dabei nicht Bestandteil des Nachrüstmoduls 23 oder der Ladeanschlusseinrichtung 22 sein. Vielmehr kann bei der Speichervorrichtung 10 vorgesehen sein, dass dasselbe Kühlaggregat 27 verwendet wird, welches auch zum Kühlen der Speichereinheit 15 vorgesehen ist. Zum Kühlen der Speichereinheit 15 kann ein Kühlkreislauf 28 vorgesehen sein, durch welchen das Kühlaggregat 27 das Kühlmedium 26 hindurchpumpt. Es kann eine Verteilereinrichtung 29 vorgesehen sein, die einen Anschluss 30 zum Anschließen des Kühlkanals 25 des Ladekabels 17 aufweist. Es können an dem Anschluss 30 ein Auslass und ein Einlass für eine Durchspülung vorgesehen sein. Hierdurch kann ein Teil des Stromes des Kühlmediums 26 aus dem Kühlkreislauf 28 abgezweigt und durch den Kühlkanal 25 geführt werden. Alternativ dazu kann der Anschluss 30 einen Wärmeübertrager aufweisen, der Wärmeenergie aus dem Kühlkanal 25 in das Kühlmedium 26 überträgt, sodass ein Kühlmedium des Kühlkanals 25 von dem Kühlmedium 26 getrennt bleiben kann.

Die Verteilereinrichtung 29 kann beispielsweise als eine Kammer oder ein Rohr ausgestaltet sein. Der Anschluss 30 kann jeweils beispielsweise als Einlass und Auslass einen Stutzen oder ein Ventil aufweisen. Die Anschlusseinrichtung 31 kann zum Beispiel als ein Adapter ausgestaltet sein, um den Kühlkanal 25 des Ladekabels 17 mit dem Anschluss 30 zu verbinden. Die Anschlusseinrichtung 31 kann auch den besagten Wärmeübertrager aufweisen.

Die Verteilervorrichtung 29 kann zumindest einen Zusatzanschluss 32 aufweisen, um zumindest eine weitere Komponente der Speichervorrichtung 10 mit dem Kühlmedium 26 zu versorgen. Es kann beispielsweise ein AC/DC-Wandler oder der besagte DC/DC-Wandler oder ein DC/DC-Wandler, über welchen zumindest eine Komponente der Speichereinheit 15 mit dem besagten DC-Bus gekoppelt ist, und/oder der Transformator 14 gekühlt werden und/oder die Innenraumluft der Speichervorrichtung 10 und/oder der Ladeanschlusseinrichtung 22 gekühlt werden.

Somit erfolgt also bei einem Stationärspeicher 21 eine zusätzliche Nutzung des vorhandenen Kühlaggregats 27, indem mit ihr in der Ladeanschlusseinrichtung 22 zumindest auch das Ladekabel 17 gekühlt wird. Hierbei kann eine örtliche Nähe (1m bis 1km) der Ladeanschlusseinrichtung 22 zum Stationärspeicher 21 ausgenutzt werden, wobei dann zum Übertragen der elektrischen Energie der elektrische Strom weiterhin beispielsweise über das Stromnetz 11 als Wechselstrom (AC) übertragen werden kann (nicht dargestellt). Alternativ dazu kann eine einzige technische Einheit gebildet werden, wie sie in der Figur dargestellt ist. Der Stationärspeicher 21 kann dann direkt (ohne nochmalige AC-Wandlung) über den besagten DC-Bus und den besagten DC/DC-Wandler rein DC-seitig mit der Ladeanschlusseinrichtung 22 gekoppelt werden. Es ist dann keine Wandlung in einen Wechselstrom bei der Übertragung der Energie von Speichereinheit 15 in das Ladekabel 17 nötig. Ein benötigter Leistungssteller (DC-DC Wandler) kann in dem Nachrüstmodul 23 bereitgestellt sein.

Zum Herstellen oder Bereitstellen dieser technischen Einheit kann das Ladekabel 17 mittels des beschriebenen Nachrüstmoduls 23 bereitgestellt sein. Zudem lässt sich nicht nur das Kühlaggregat 27 selbst, sondern auch eine Steuereinheit 33, die das Kühlaggregat 27 steuert, ebenfalls synergetisch nutzen. Es können damit auch Steuervorgänge in der Ladeanschlusseinrichtung 22, beispielsweise das Abrechnen der übertragenen Energie, durch die Steuereinheit 33 durchgeführt werden, sodass keine zusätzliche Steuerung in der Ladeanschlusseinrichtung 22 nötig ist. Alternativ dazu kann in dem Nachrüstmodul 23 aber auch eine eigene Steuereinheit und/oder Abrechnungseinheit bereitgestellt sein.

In dem Stationärspeicher 21 ist lediglich ein zusätzlicher Anschluss 30 in der Verteilereinrichtung 29 nötig.

Insgesamt kann damit der Stationärspeicher 21 zusätzlich die Kühlfunktion für das Ladekabel 17 und/oder den Stecker 18 bei einem DC-Ladevorgang des Kraftfahrzeugs 12 übernehmen. Damit wird aber auch sein eigenes Kühlaggregat 27 besser ausgelastet. Man spart ein separates Kühlaggregat für das Ladekabel 17. Entsprechend ist auch eine geringere Menge an Kältemittel oder Wärmeträger, d.h. weniger Kühlmedium 26, notwendig. Die Summen-Kühlleistung, wie sie für zwei Kühlaggregate bereitgestellt werden müsste, ist geringer aufgrund einer geringeren Pausen- und/oder niedrige Lastzeit, die sich bei nur einem Kühlaggregat 27 ergibt. Somit erhält man eine höhere Effizienz im Betrieb des einzigen Kühlaggregats 27 des Stationärspeichers 21, da es häufiger in Volllast betrieben wird und damit der Wirkungsgrad über der Last vergrößert wird.

Zudem ergibt sich durch die geringere Anzahl an Komponenten eine bauliche Vereinfachung der Speichervorrichtung 10 insgesamt, wodurch eine Komplexitätsverringerung und damit auch eine geringere Anzahl an technischen Komponenten für die Bereitstellung nötig sind. Es kann eine zentrale Steuereinheit 33 auch zur Abrechnung laufender Kosten, die Freigabe der Energieübertragung zum Kraftfahrzeug 12 hin und eine Zertifizierung ermöglicht werden.

Die Speichervorrichtung 10 kann somit mit geringeren Investitionskosten und auch mit geringeren laufenden Kosten betrieben werden.

Das verwendete Kühlmedium 26 kann unterschiedlich sein. Je nach Anwendung der Speichervorrichtung 10. Das Kühlmedium kann beispielsweise Luft sein oder ein Wasser-Glykol-Gemisch oder Öl oder ein Kältemittel.

Die Speichervorrichtung 10 kann zum elektrischen Versorgen mit Energie für elektrische Boote, Schiffe, Busse, Lastkraftwagen, Transportfahrzeuge, Personenkraftwagen, Zweiräder, Baumaschinen wie z.B. Bagger, Fluggeräte und/oder Drohnen vorgesehen sein.

Die Steuereinheit 33 kann beispielsweise als ein Steuergerät ausgestaltet sein.

Der Kühlkanal 25 kann beispielsweise auf der Grundlage von Schläuchen gebildet sein, die parallel zu elektrischen Kupferdrähten des Ladekabels 17 verlegt sein können der Kühlkanal 25 kann auch als ein Schlauch oder Mantel ausgestaltet sein, in welchem elektrische Leitelemente des Ladekabels 15 angeordnet oder verlegt sein können.

Das Beispiel zeigt, wie in einem Stationärspeicher eine synergetische Bereitstellung von Kühlleistung sowohl für Komponenten des Stationärspeichers selbst als auch für eine Ladesäule erfolgen kann.

### Bezugszeichenliste

- 10: Speichervorrichtung
- 11: Stromnetz
- 12: Kraftfahrzeug
- 13: Traktionsbatterie
- 14: Transformator
- 15: Speichereinheit
- 16: Gehäuse
- 17: Ladekabel
- 18: Stecker
- 19: Ladebuchse
- 20: Elektrische Leitungen
- 21: Stationärspeicher
- 22: Ladeanschlusseinrichtung
- 23: Nachrüstmodul
- 24: Elektrische Anschlusseinrichtung
- 25: Kühlkanal
- 26: Kühlmedium
- 27: Kühlaggregat
- 28: Kühlkreislauf
- 29: Verteilereinrichtung / Wärmeübertrager
- 30: Anschluss
- 31: Anschlusseinrichtung
- 32: Zusatzanschluss
- 33: Steuereinheit

## Patentansprüche

1. Elektrische Speichervorrichtung (10) zum Bereitstellen von elektrischer Energie für einen Ladevorgang zumindest eines elektrisch antreibbaren Kraftfahrzeugs (12), wobei der Ladevorgang einen Energiefluss von der Speichervorrichtung (10) zum Kraftfahrzeug (12) umfasst, indem die elektrische Speichervorrichtung (10) elektrische Energie aus einem Stromnetz (11) zwischenspeichert, um dann mittels der gespeicherten Energie das elektrisch antreibbare Kraftfahrzeug (12) zu versorgen, und/oder wobei der Ladevorgang einen Energiefluss vom Kraftfahrzeug (12) zur Speichervorrichtung (10) umfasst, aufweisend:
- eine Speichereinheit (15) zum Speichern der Energie,
- ein Kühlaggregat (27) zum Bereitstellen von Kühlleistung und
- einen Kühlkreislauf (28), der dazu eingerichtet ist, Wärmeenergie von der Speichereinheit (15) mittels eines Kühlmediums (26) zu dem Kühlaggregat (27) zu fördern, wobei
zumindest ein Ladekabel (17) mit der Speichereinheit (15) gekoppelt ist, wobei das jeweilige Ladekabel (17) zum Anschließen an das Kraftfahrzeug (12) ausgestaltet ist und einen Kühlkanal (25) aufweist, und wobei eine Verteilereinrichtung (29) bereitgestellt ist, die dazu eingerichtet ist, einen Teil des Kühlmediums (26) in den Kühlkanal (25) des Ladekabels (17) umzuleiten oder mittels eines Wärmeübertragers Wärmeenergie aus dem Kühlkanal (25) in das Kühlmedium (26) abzuführen, wobei die Verteilereinrichtung (29) als eine Kammer oder ein Rohr oder ein Kanister ausgestaltet ist und einen Anschluss (30) zum Anschließen des Kühlkanals (25) des Ladekabels (17) aufweist.

2. Speichervorrichtung (10) nach Anspruch 1, wobei das jeweilige Ladekabel (17) einen Stecker (18) zum Einstecken in eine Ladebuchse (19) des jeweiligen Kraftfahrzeugs (12) aufweist und der Kühlkanal (25) über eine Wärmetauscheinrichtung mit dem Stecker (18) gekoppelt oder der Kühlkanal (25) durch den Stecker (18) geführt ist.

3. Speichervorrichtung (10) nach einem der vorhergehenden Ansprüche, wobei als das Kühlmedium (26) ein Gas und/oder eine Flüssigkeit, insbesondere ein Wasser-Glykol-Gemisch und/oder ein Öl und/oder ein Kältemittel, bereitgestellt ist.

4. Speichervorrichtung (10) nach einem der vorhergehenden Ansprüche, wobei das zumindest eine Ladekabel (17) durch jeweils eine Ladeanschlusseinrichtung (22) bereitgestellt ist, die baulich getrennt von einem Gehäuse (16) der Speichereinheit (15) bereitgestellt ist und eine elektrische Kopplung der Speichereinheit (15) mit dem Ladekabel (17) über einen an der Speichereinheit (15) bereitgestellten DC/AC-Wandler und einen in der Ladeanschlusseinrichtung (22) bereitgestellten AC/DC-Wandler vorgesehen ist.

5. Speichervorrichtung (10) nach einem der Ansprüche 1 bis 3, wobei das Ladekabel (17) über einen DC-Bus und einen DC/DC-Wandler mit der Speichereinheit (15) gekoppelt ist und Speichervorrichtung (10) dazu eingerichtet ist, die Energie mittels Gleichstrom von der Speichereinheit (15) in das Ladekabel (17) zu übertragen.

6. Speichervorrichtung (10) nach einem der vorhergehenden Ansprüche, wobei die Verteilereinrichtung (29) zumindest einen jeweiligen Zusatzanschluss (32) aufweist, über welchen jeweils eine weitere Komponente der Speichervorrichtung (10) an das Kühlaggregat (27) angeschlossen ist.

7. Speichervorrichtung (10) nach einem der vorhergehenden Ansprüche, wobei eine gemeinsame Steuereinheit (33) zum Steuern des Kühlaggregats (27) und zum Steuern einer Leistungsabgabe der Speichereinheit (15) an das Ladekabel (17) vorgesehen ist.

8. Speichervorrichtung (10) nach einem der vorhergehenden Ansprüche, wobei die Speichereinheit (15) und das Kühlaggregat (27) als ein Stationärspeicher (21) ausgestaltet sind und das zumindest eine Ladekabel (17) und eine elektrische Verbindungseinrichtung (24) zum elektrischen Verbinden des zumindest einen Ladekabels (17) mit dem Stationärspeicher (21) als ein Nachrüstmodul (23) für den Stationärspeicher (21) bereitgestellt sind, wobei das Nachrüstmodul (23) das zumindest eine Ladekabel (17) und die elektrische Verbindungseinrichtung (24) zum elektrischen Verbinden des zumindest einen Ladekabels (17) mit dem Stationärspeicher (21) bereitstellt und durch das Nachrüstmodul (23) für einen jeweiligen Kühlkanal (25) des zumindest einen Ladekabels (17) eine Anschlusseinrichtung (31) bereitgestellt ist, die dazu eingerichtet ist, den Kühlkanal (25) des Ladekabels (17) mit einer Verteilereinrichtung (29) eines Kühlkreislaufs (28) des Stationärspeichers (21) zu koppeln.

9. Verfahren zum Betreiben einer Speichervorrichtung (10) nach einem der Ansprüche 1 bis 8, wobei eine Speichereinheit (15) elektrische Energie für einen Ladevorgang zumindest eines elektrisch antreibbaren Kraftfahrzeugs (12) speichert und ein Kühlaggregat (27) Kühlleistung bereitstellt und ein Kühlkreislauf (28) Wärmeenergie von der Speichereinheit (15) mittels eines Kühlmediums (26) zu dem Kühlaggregat (27) fördert, wobei
zumindest ein Ladekabel (17) mit der Speichereinheit (15) gekoppelt ist, wobei das jeweilige Ladekabel (17) zum Anschließen an das Kraftfahrzeug (12) ausgestaltet ist und einen Kühlkanal (25) aufweist, und wobei eine Verteilereinrichtung (29) einen Teil des Kühlmediums (26) in den Kühlkanal (25) des Ladekabels (17) umleitet oder mittels eines Wärmeübertragers Wärmeenergie aus dem Kühlkanal (25) in das Kühlmedium (26) abführt, wobei die Verteilereinrichtung (29) als eine Kammer oder ein Rohr oder ein Kanister ausgestaltet ist und einen Anschluss (30) zum Anschließen des Kühlkanals (25) des Ladekabels (17) aufweist.

## Claims

1. Electrical storage apparatus (10) for providing electrical energy for a charging process of at least one electrically driveable motor vehicle (12), wherein the charging process comprises a flow of energy from the storage apparatus (10) to the motor vehicle (12) by virtue of the electrical storage apparatus (10) buffer-storing electrical energy from an electricity grid (11) in order then to supply power to the electrically driveable motor vehicle (12) by means of the stored energy, and/or wherein the charging process comprises a flow of energy from the motor vehicle (12) to the storage apparatus (10), having:
- a storage unit (15) for storing the energy,
- a cooling assembly (27) for providing cooling power and
- a cooling circuit (28), which is configured to convey thermal energy from the storage unit (15) to the cooling assembly (27) by means of a cooling medium (26), wherein at least one charging cable (17) is coupled to the storage unit (15), wherein the respective charging cable (17) is designed for connection to the motor vehicle (12) and has a cooling channel (25),
**characterized in that**
a distributor device (29) is provided, which is configured to divert a portion of the cooling medium (26) into the cooling channel (25) of the charging cable (17) or to dissipate thermal energy from the cooling channel (25) into the cooling medium (26) by means of a heat exchanger, wherein the distributor device (29) is designed as a chamber or a pipe or a canister and has a connection (30) for connecting the cooling channel (25) of the charging cable (17).

2. Storage apparatus (10) according to Claim 1, wherein the respective charging cable (17) has a plug (18) for plugging into a charging socket (19) of the respective motor vehicle (12) and the cooling channel (25) is coupled to the plug (18) by means of a heat exchanging device or the cooling channel (25) is led through the plug (18).

3. Storage apparatus (10) according to either of the preceding claims, wherein a gas and/or a liquid, in particular a water/glycol mixture and/or an oil and/or a coolant, is provided as the cooling medium (26).

4. Storage apparatus (10) according to one of the preceding claims, wherein the at least one charging cable (17) is provided by a respective charging connection device (22), which is provided structurally separately from a housing (16) of the storage unit (15) and an electrical coupling of the storage unit (15) to the charging cable (17) is provided by means of a DC/AC converter provided on the storage unit (15) and an AC/DC converter provided in the charging connection device (22) .

5. Storage apparatus (10) according to one of Claims 1 to 3, wherein the charging cable (17) is coupled to the storage unit (15) by means of a DC bus and a DC/DC converter and the storage apparatus (10) is configured to transmit the energy from the storage unit (15) to the charging cable (17) by means of direct current.

6. Storage apparatus (10) according to one of the preceding claims, wherein the distributor device (29) has at least one respective additional connection (32), by means of which a respective further component of the storage apparatus (10) is connected to the cooling assembly (27).

7. Storage apparatus (10) according to one of the preceding claims, wherein a common control unit (33) is provided to control the cooling assembly (27) and to control a power output of the storage unit (15) to the charging cable (17).

8. Storage apparatus (10) according to one of the preceding claims, wherein the storage unit (15) and the cooling assembly (27) are designed as a stationary store (21) and the at least one charging cable (17) and an electrical connecting device (24) are provided to electrically connect the at least one charging cable (17) to the stationary store (21) as a retrofit module (23) for the stationary store (21), wherein the retrofit module (23) provides the at least one charging cable (17) and the electrical connecting device (24) to electrically connect the at least one charging cable (17) to the stationary store (21) and the retrofit module (23) provides a connection device (31) for a respective cooling channel (25) of the at least one charging cable (17), said connection device being configured to couple the cooling channel (25) of the charging cable (17) to a distributor device (29) of a cooling circuit (28) of the stationary store (21).

9. Method for operating a storage apparatus (10) according to one of Claims 1 to 8, wherein a storage unit (15) stores electrical energy for a charging process of at least one electrically driveable motor vehicle (12) and a cooling assembly (27) provides cooling power and a cooling circuit (28) conveys thermal energy from the storage unit (15) to the cooling assembly (27) by means of a cooling medium (26), wherein
at least one charging cable (17) is coupled to the storage unit (15), wherein the respective charging cable (17) is designed for connection to the motor vehicle (12) and has a cooling channel (25),
**characterized in that**
a distributor device (29) diverts a portion of the cooling medium (26) into the cooling channel (25) of the charging cable (17) or dissipates thermal energy from the cooling channel (25) into the cooling medium (26) by means of a heat exchanger, wherein the distributor device (29) is designed as a chamber or a pipe or a canister and has a connection (30) for connecting the cooling channel (25) of the charging cable (17).

## Revendications

1. Arrangement d'accumulation (10) électrique destiné à fournir de l'énergie électrique pour une opération de charge d'au moins un véhicule automobile (12) pouvant être propulsé électriquement, l'opération de charge comprenant un flux d'énergie de l'arrangement d'accumulation (10) vers le véhicule automobile (12), en ce que l'arrangement d'accumulation (10) électrique stocke temporairement de l'énergie électrique en provenance d'un réseau électrique (11) afin d'alimenter ensuite le véhicule automobile (12) pouvant être propulsé électriquement au moyen de l'énergie accumulée, et/ou l'opération de charge comprenant un flux d'énergie du véhicule automobile (12) vers l'arrangement d'accumulation (10), possédant :
- une unité d'accumulation (15) destinée à accumuler l'énergie,
- un groupe de refroidissement (27) destiné à fournir de la puissance frigorifique et
- un circuit de refroidissement (28), qui est conçu pour transporter de l'énergie thermique de l'unité d'accumulation (15) vers le groupe de refroidissement (27) au moyen d'un fluide de refroidissement (26),
au moins un câble de charge (17) étant connecté à l'unité d'accumulation (15), le câble de charge (17) respectif étant configuré pour le raccordement au véhicule automobile (12) et possédant un canal de refroidissement (25),
**caractérisé en ce que**
un dispositif de distribution (29) est présent, lequel est conçu pour dériver une partie du fluide de refroidissement (26) dans le canal de refroidissement (25) du câble de charge (17) ou dissiper de l'énergie thermique hors du canal de refroidissement (25) dans le fluide de refroidissement (26) au moyen d'un agent caloporteur, le dispositif de distribution (29) étant réalisé sous la forme d'une chambre ou d'un tube ou d'un bidon et possédant un raccord (30) servant au raccordement du canal de refroidissement (25) du câble de charge (17).

2. Arrangement d'accumulation (10) selon la revendication 1, le câble de charge (17) respectif possédant une fiche (18) destinée à être enfichée dans une prise de charge (19) du véhicule automobile (12) respectif et le canal de refroidissement (25) étant couplé à la fiche (18) par le biais d'un dispositif échangeur de chaleur ou le canal de refroidissement (25) étant acheminé à travers la fiche (18).

3. Arrangement d'accumulation (10) selon l'une des revendications précédentes, le fluide de refroidissement (26) fourni étant un gaz et/ou un liquide, notamment un mélange eau-glycol et/ou une huile et/ou un fluide frigorigène.

4. Arrangement d'accumulation (10) selon l'une des revendications précédentes, l'au moins un câble de charge (17) étant respectivement fourni par le biais d'un dispositif de raccordement de charge (22), qui est fourni structurellement séparément d'un boîtier (16) de l'unité d'accumulation (15), et une connexion électrique de l'unité d'accumulation (15) avec le câble de charge (17) étant prévue par le biais d'un convertisseur CC/CA fourni au niveau de l'unité d'accumulation (15) et d'un convertisseur CA/CC fourni dans le dispositif de raccordement de charge (22).

5. Arrangement d'accumulation (10) selon l'une des revendications 1 à 3, le câble de charge (17) étant connecté à l'unité d'accumulation (15) par le biais d'un bus CC et d'un convertisseur CC/CC et l'arrangement d'accumulation (10) étant configuré pour transmettre l'énergie de l'unité d'accumulation (15) dans le câble de charge (17) au moyen de courant continu.

6. Arrangement d'accumulation (10) selon l'une des revendications précédentes, le dispositif de distribution (29) possédant au moins un raccord supplémentaire (32) respectif, par le biais duquel un composant supplémentaire de l'arrangement d'accumulation (10) est respectivement raccordé au groupe de refroidissement (27).

7. Arrangement d'accumulation (10) selon l'une des revendications précédentes, une unité de commande commune (33) destinée à commander le groupe de refroidissement (27) et destinée à commander une émission de puissance de l'unité d'accumulation (15) dans le câble de charge (17) étant présente.

8. Arrangement d'accumulation (10) selon l'une des revendications précédentes, l'unité d'accumulation (15) et le groupe de refroidissement (27) étant réalisés sous la forme d'un accumulateur stationnaire (21) et l'au moins un câble de charge (17) ainsi qu'un dispositif de liaison électrique (24) servant à la liaison électrique de l'au moins un câble de charge (17) à l'accumulateur stationnaire (21) étant fournis sous la forme d'un module additionnel (23) pour l'accumulateur stationnaire (21), le module additionnel (23) fournissant l'au moins un câble de charge (17) et le dispositif de liaison électrique (24) servant à la liaison électrique de l'au moins un câble de charge (17) à l'accumulateur stationnaire (21) et un dispositif de raccordement (31) étant fourni par le module additionnel (23) pour un canal de refroidissement (25) respectif de l'au moins un câble de charge (17), lequel est conçu pour connecter le canal de refroidissement (25) du câble de charge (17) à un dispositif de distribution (29) d'un circuit de refroidissement (28) de l'accumulateur stationnaire (21).

9. Procédé pour faire fonctionner un arrangement d'accumulation (10) selon l'une des revendications 1 à 8, une unité d'accumulation (15) accumulant de l'énergie électrique pour une opération de charge d'au moins un véhicule automobile (12) pouvant être propulsé électriquement et un groupe de refroidissement (27) fournissant de la puissance frigorifique et un circuit de refroidissement (28) transportant de l'énergie thermique de l'unité d'accumulation (15) vers le groupe de refroidissement (27) au moyen d'un fluide de refroidissement (26),
au moins un câble de charge (17) étant connecté à l'unité d'accumulation (15), le câble de charge (17) respectif étant configuré pour le raccordement au véhicule automobile (12) et possédant un canal de refroidissement (25),
**caractérisé en ce que**
un dispositif de distribution (29) dérive une partie du fluide de refroidissement (26) dans le canal de refroidissement (25) du câble de charge (17) ou dissipe de l'énergie thermique hors du canal de refroidissement (25) dans le fluide de refroidissement (26) au moyen d'un agent caloporteur, le dispositif de distribution (29) étant réalisé sous la forme d'une chambre ou d'un tube ou d'un bidon et possédant un raccord (30) servant au raccordement du canal de refroidissement (25) du câble de charge (17).
